# EUROPÄISCHE PATENTSCHRIFT

(11) **EP 1 680 316 B1**
(45) Veröffentlichungstag und Bekanntmachung des Hinweises auf die Patenterteilung: **25.03.2009**
(21) Anmeldenummer: 04790755.5
(22) Anmeldetag: 22.10.2004
(51) Int. Cl.: B62D 1/18

(54) **DICHTELEMENT ZUR ANORDNUNG ZWISCHEN EINER KFZ-LENKS ULEN-ABD ECKUNG UND EINEM VERKLEIDUNGSTEIL, ANORDNUNG AUS EINEM DICHTELEMENT UND EINEM VERKLEIDUNGSTEIL SOWIE VERFAHREN ZUR MONTAGE DES DICHTELEMENTS AN EINEM VERKLEIDUNGSTEIL**
SEALING ELEMENT FOR ARRANGING BETWEEN A MOTOR VEHICLE STEERING COLUMN COVER AND A LINING PART, ARRANGEMENT CONSISTING OF A SEALING ELEMENT AND A LINING PART, AND METHOD FOR MOUNTING A SEALING ELEMENT ON A LINING PART
JOINT DESTINE A ETRE DISPOSE ENTRE UN CAPOT DE COLONNE DE DIRECTION D'UN VEHICULE ET UN ELEMENT DE GARNITURE, DISPOSITIF COMPOSE D'UN JOINT ET D'UN ELEMENT DE GARNITURE, ET PROCEDE DE MONTAGE D'UN JOINT SUR UN ELEMENT DE GARNITURE

(30) Priorität: 27.10.2003 DE 10349681
(43) Veröffentlichungstag der Anmeldung: 19.07.2006
(73) Patentinhaber: Faurecia Innenraum Systeme GmbH, 76767 Hagenbach (DE)
(72) Erfinder: BRANDSTÄTTER, Albert, 85235 Odelzhausen (DE)
(74) Vertreter: Schatt, Markus F.
(86) Internationale Anmeldenummer: PCT/EP2004/011962
(87) Internationale Veröffentlichungsnummer: WO 2005/042333

(56) Entgegenhaltungen:
- DE-C1- 10 130 931
- DE-C1- 19 718 520
- US-A- 4 899 612

## Beschreibung

Die Erfindung betrifft ein Dichtelement zur Anordnung zwischen einer Kfz-Lenksäulen-Abdeckung und einem Verkleidungsteil, eine Anordnung aus einem Dichtelement und einem Verkleidungsteil sowie ein Verfahren zur Montage des Dichtelements an einem Verkleidungsteil. Das Dichtelement bzw. die Anordnung ist insbesondere im Zusammenwirken mit einer verstellbaren Kfz-Lenksäule vorgesehen.

Lenksäulen von Kraftfahrzeugen (Kfz) erstrecken sich von dem Fahrzeug-Innenraum in Richtung zum Lenkgetriebe und durchragen eine Öffnung in der Instrumententafel oder einem Innenraum-Verkleidungsteil insbesondere im Bein-Bereich des Fahrers. Insbesondere im Bereich des Kfz-Innenraums sind Lenksäulen abschnittsweise von einer Verkleidung ummantelt. Dieses Lenksäulen-Verkleidungsteil oder diese Lenksäulen-Abdeckung erstreckt sich bis zum Innenraum-Verkleidungsteil und typischerweise auch durch die darin vorgesehene Öffnung hindurch.

Bei quer zur Lenksäulen-Achse verstellbaren Lenksäulen ist die Öffnung im Verkleidungsteil in Größe und Form entsprechend den vorgesehenen Verstellmöglichkeiten der Lenksäule sowie der Form der Lenksäulen-Abdeckung gebildet, so dass in jeder Verstellposition der Lenksäule aus Sicht des Fahrers unterhalb der Lenksäule eine Rest-Öffnung oder eine Luke oder ein Spalt verbleibt. Diese bzw. dieser ist somit in Größe und Form ebenfalls abhängig von der Verstellposition der Lenksäule.

Aus dem Stand der Technik ist bekannt, die verbleibende Öffnung oder den Spalt gar nicht oder im Wesentlichen aus optischen Gründen mittels einer Jalousie aus textilem Gewebe oder aus Kunststoff-Lamellen abzudecken.

Aus der DE 43 37 721 C1 ist eine Spaltabdeckung an einer verstellbaren Lenksäule eines Kraftfahrzeuges bekannt, die aus einem biegsamen Abdeckelement für den veränderlichen Spalt zwischen der Lenksäule bzw. einem damit verbundenen Verkleidungsteil und einem gegenüberliegenden Teil eines Armaturenträgers gebildet ist. Das Abdeckelement ist in einem in einem einer Mittellage der Lenksäule entsprechenden Längsschnitt etwa S-förmig gekrümmt und bildet damit eine Schleife, die in dem an das Verkleidungsteil angrenzenden Bereich zu dem Fahrzeuglenker hin konkav gekrümmt ist. Dazu sind die Endbereiche des Abdeckelements in Achsrichtung der Lenksäule etwa entgegengesetzt verlaufend an den jeweils zugeordneten Bauteilen befestigt. Die zur Achse der Lenksäule etwa entgegengesetzt gerichteten Endbereiche des Abdeckelements sind einerseits an dem Verkleidungsteil und andererseits an dem Gehäuse, das lösbar mit dem Armaturenträger verbunden ist, befestigt. Die Befestigung an dem Verkleidungsteil der Lenksäule ist mit einem Bügel und einer Clip-Verbindung vorgesehen. Bei einer axialen Bewegung der Lenksäule wird ein Großteil der Spaltabdeckung in unbestimmter Weise nach außen oder innen gewölbt, was nachteilig ist.

Aus der DE 103 49 681 C2 ist ein Abdeckteil zur Anordnung zwischen einem Verkleidungsteil und einer Lenksäulen-Abdeckung einer Lenkachse offenbart, das mehrere ringförmige und in axialer Richtung voneinander beabstandete Stützteile aufweist, die aus einem formsteifen Kunststoff gebildet sind, und durch jeweils eine elastische Verbindung verbunden sind. Das Abdeckteil ist außenseitig zur Verbesserung des Aussehens mit einer dehnbaren Folie kaschiert.

Die DE 101 30 931 C1 offenbart gemäss dem Oberbegriff des Anspruchs 1 eine Verkleidung für eine Durchtrittsöffnung einer Abdeckung einer axial und in der Höhe verstellbaren Lenksäule in einer Innenraumverkleidung eines Kraftfahrzeugs. Zwischen dem Verkleidungsteil und der Lenksäulen-Abdeckung ist ein Dichtelement angeordnet. Das Dichtelement ist in einer Schnittebene gesehen, in der die Lenk-Mittelachse gelegen ist.

Eine Aufgabe der Erfindung ist, ein zwischen Verkleidungsteil und Lenksäule wirkendes Dichtelement bereitzustellen, das stabil zwischen dem Innenraum-Verkleidungsteil und der Lenksäulen-Abdeckung in jeder Verstellposition stabil angeordnet ist und den Innenraum-Komfort verbessert.

Eine weitere Aufgabe der Erfindung ist, ein Verfahren bereitzustellen, mit dem das erfindungsgemäße Dichtelement auf wirtschaftliche Weise in hoher Stückzahl hergestellt und montiert werden kann, wobei das Dichtelement dann ausreichend gut an dem entsprechenden Verkleidungsteil befestigt ist, dass es bei der Verwendung einer verstellbaren Lenksäule auch eine sehr hohe angenommene Anzahl von Betätigungen der Lenksäule unbeschadet standhält.

Diese Aufgaben werden mit den unabhängigen Patentansprüchen gelöst. Weitere Ausführungsformen sind in den auf diese jeweils rückbezogenen Unteransprüchen angegeben.

Erfindungsgemäß ist ein Dichtelement zur Anordnung zwischen einem Verkleidungsteil und einer Lenksäulen-Abdeckung einer Lenkachse vorgesehen, das ein Schaumteil aus einem rückstellfähigen Material aufweist und mit zwei Schenkeln und einem diese verbindenden, gekrümmten Mittelteil gebildet ist.

Erfindungsgemäß ist ein Dichtelement zur Anordnung zwischen einem Verkleidungsteil und einer Lenksäulen-Abdeckung einer Lenkachse vorgesehen, das ein Schaumteil aus einem rückstellfähigen Material und torüsförmig und/oder ringförmig gebildet ist.

Das Dichtelement kann zweischichtig aus dem rückstellfähigem Schaumteil und zusätzlich auf der der Lenksäulen-Abdeckung zugewandten Seite zumindest abschnittweise zusätzlich aus einer Schicht aus gleitfähigem Material gebildet sein. Die Schicht aus gleitfähigem Material kann aufkaschiert, aufgeklebt oder durch Beflocken auf das Schaumteil aufgebracht seint. Alternativ kann die Schicht aus gleitfähigem Material aus einem Überzugsteil aus flexiblem und dehnfähigem Material gebildet sein. Das Überzugsteil kann dabei dem Schaumteil zumindest abschnittsweise übergespannt und/oder auf dem Verkleidungsteil mittels Befestigungsmitteln fixiert sein. Das Überzugsteil kann auf dem Verkleidungsteil punktweise oder bereichsweise aufgeklebt sein. Alternativ oder zusätzlich kann das Überzugsteil mit dem Verkleidungsteil punktweise oder bereichsweise verschweißt sein.

Das Überzugsteil kann auch als Schlauch oder Hose mit der Form des herzustellenden Dichtelements gebildet sein, wobei in den Schlauch oder die Hose Schaum zur Bildung des Dichtelements eingeschäumt ist.

Das Überzugsteil kann einschichtig aus einem Polyamid-Gewebe gebildet sein.

Alternativ kann das Überzugsteils zweischichtig aus einem Polyamid-Gewebe und einer Schaumschicht gebildet sein, wobei die Schaumschicht auf der Schaumteil-Seite angeordnet ist.

Auch kann das Überzugsteil dreischichtig aus zwei Polyamid-Gewebeschichten und einer zwischen diesen gelegenen Schaumschicht gebildet sein.

Als Material des Schaumteils kann ein Material verwendet werden, bei dem einzelne oder mehrere folgender Bestimmungsgrössen erfüllt sind:
- Materialdichte vorzugsweise 24 kg/m³ mit einer Abweichung von +/- 0,25;
- Stauchhärte bei 40% Verformung: zwischen 0,5 und 3 kPa;
- Schaumstoff-Zellenzahl zwischen 20 und 200 pro cm.

Das Schaumteil kann aus Polyether oder Polyurethan gebildet sein.

Erfindungsgemäß ist weiterhin eine Anordnung zwischen einem Verkleidungsteil und einer Lenksäulen-Abdeckung mit einem zwischen diesen angeordneten Dichtelement vorgesehen, wobei das Dichtelement in einer Schnittebene gesehen, in der die Lenk-Mittelachse gelegen ist und die durch das mittlere Drittel des Dichtelements verläuft, in bezug auf die Lenksäulen-Abdeckung und das Verkleidungsteil derart positioniert ist, dass die auf die Schnittebene projizierte Verlängerung der Konturlinien des Randbereichs des Verkleidungsteils oder der Schnittlinien in der Schnittebene innerhalb des Querschnitts des Dichtelements gelegen ist.

Bei der Anordnung aus einem Dichtelement kann das Dichtelement auf einem Rahmenelement eingesetzt sein. Weiterhin kann an dem Bereich der Lenksäulen-Abdeckung, die zur Anlage an das Dichtelement vorgesehen ist, eine Teflon-Schicht angeordnet sein.

Erfindungsgemäß wird auch ein Verfahren zur Montage eines Dichtelements zwischen einem Verkleidungsteil und einer Lenksäulen-Abdeckung mit folgenden Schritten vorgeschlagen:
- Positionierung des Verkleidungsteils auf der Oberseite einer Aufnahme-Vorrichtung,
- Auflegen eines vorgefertigtes Ausgangsmaterials zur Bildung des Überzugsteils an dem Verkleidungsteil,
- Fixieren des Überzugsteils mit einem ersten Randbereich an dem Verkleidungsteil,
- Fixieren eines zweiten Randbereichs des vorgefertigten Überzugsteils mittels Laschen an dem Verkleidungsteil.

Bei dem erfindungsgemäßen kann das Fixieren des Überzugsteils mit einem ersten Randbereich durch Verkleben oder Verschweißen oder mittels Befestigungselementen erfolgen. Das Fixieren des Überzugsteils mit dem zweiten Randbereich kann alternativ oder zusätzlich durch Verkleben oder Verschweißen oder mittels Befestigungselementen erfolgen.

Das Schaumteil kann an dem Überzugsteil und/oder an dem Verkleidungsteil befestigt werden. Das Verschweißen oder Ankleben kann punktweise oder über flächige Bereiche erfolgen.

Ein Vorteil des erfindungsgemäßen Dichtelements ist, dass bei der Verwendung einer verstellbaren Lenksäule die erforderliche Kraft zur Verstellung derselben verhältnismäßig gering ist.

Ein weiterer Vorteil der Erfindung ist, dass mit der Gleitschicht eine große Haltbarkeit des Dichtelements im operationellen Betrieb erreicht wird.

Das erfindungsgemäße Dichtelement 1 ist auch vorteilhaft, wenn die Lenksäule nicht verstellbar ist, da die Lage-Stabilität des Dichtelements auch bei Vibrationen der Teile, zwischen denen das Dichtelement angeordnet ist, gewährleistet ist.

Durch die Verwendung des erfindungsgemäßen Dichtelements wird eine effiziente Abdichtung des Innenraums gegen Lärm und Schmutz aus dem Fahrgestell-Bereich erreicht.

Im folgenden werden die Erfindungen an Hand der beigefügten Figuren beschrieben, die zeigen:
- Figur 1 in schematischer Darstellung ein Ausschnitt des Verkleidungsteils und der Lenksäulen-Abdeckung sowie des zwischen diesen angeordneten Dichtelements von der Seite gesehen,
- Figur 2 in schematischer Darstellung ein Ausschnitt der Kombination aus Verkleidungsteil, der Lenksäulen-Abdeckung und des zwischen diesen angeordneten Dichtelements vom Fahrzeug-Innenraum aus gesehen, wobei keine Lenksäulen-Achse dargestellt ist, so dass eine entsprechende Öffnung in der Lenksäulen-Abdeckung sichtbar ist,
- Figur 3 eine Ansicht einer Ausführungsform eines für das erfindungsgemäße Dichtelement verwendeten Schaumbeschnitts für sich betrachtet und von schräg vorne gesehen;
- Figur 4a ein Endstück einer Variante des Schaumbeschnitts von schräg vorne gesehen, der geeignet ist für den formschlüssigen Einsatz in ein für das Verkleidungsteil zu verwendendes Rahmenelement,
- Figur 4b ein Rahmenelement zur Aufnahme des Schaumbeschnitts nach der Figur 4a, das einteilig mit dem Verkleidungsteil oder als eigenständiges Teil ausgebildet sein kann,
- Figur 4c ein Endstück der Kombination des Dichtelements mit dem Rahmenelement der Figur 4b, wobei das erfindungsgemäße Überzugsteil auf den Schaumbeschnitt aufkaschiert ist,
- Figur 5a eine weitere Ausführungsform des Dichtelements, wobei dieses in einer in Umfangsrichtung geschlossenen Form gebildet ist,
- Figur 5b eine weitere Ausführungsform des Dichtelements, wobei dieses in einer in Umfangsrichtung geschlossenen Form und zweiteilig gebildet ist,
- Figur 5c eine weitere Ausführungsform des Dichtelements, wobei dieses in einer in Umfangsrichtung geschlossenen Form gebildet ist,
- Figur 6 ein Ausschnitt einer weiteren Ausführungsform des Dichtelements zur Verwendung mit oder ohne einem Rahmenelement, bei dem das Überzugsteil dem Schaumbeschnitt übergespannt ist, vom Inneren des Verkleidungsteils aus in Richtung zum Fahrzeug-Innenraum gesehen,
- Figur 7 die Ausführungsform des Dichtelementes nach der Figur 6 im Seitenschnitt entlang der Linie 2-2 in der Figur 6, wobei der mit dem Dichtelement zusammenwirkenden Öffnungsrand des Verkleidungsteils sowie die Lenksäulen-Abdeckung dargestellt sind, wobei letztere in einer Referenzposition und in zwei weiteren Positionen durch eine strichlinierte Darstellung gezeigt ist,
- Figur 8 ein Querschnitt durch das Überzugsteil zur Verwendung für ein Dichtelement nach der Figur 6,
- Figur 9a zur Darstellung eines Schrittes der erfindungsgemäßen Montage des Dichtelements an einem Verkleidungsteil das auf einer Aufnahme-Vorrichtung aufgesetzte Verkleidungsteil mit einem an diesem fixierten Überzugsteil im vorgefertigten Zustand,
- Figur 9b die Darstellung eines weiteren Schrittes der Montage des Dichtelements an einem Verkleidungsteil, bei dem ausgehend von dem Schritt nach der Figur 9a ein Schaumbeschnitt auf das Verkleidungsteil aufgelegt wird,
- Figur 9c die Darstellung eines weiteren Schrittes der Montage des Dichtelements an einem Verkleidungsteil, bei dem der Schaumbeschnitt an vorbestimmten Punkten auf das Verkleidungsteil aufgeschweißt wird, wobei dieser Schritt auch alternativ ausgeführt sein kann,
- Figur 9d die Darstellung eines weiteren Montage-Schrittes, bei dem das Überzugsteil auf der dem Fahrzeug-Innenraum abgewandten Seite des Verkleidungsteils dem Schaumbeschnitt übergespannt und in einer Alternative an vorbestimmten Punkten an dem Verkleidungsteil aufgeschweißt wird.

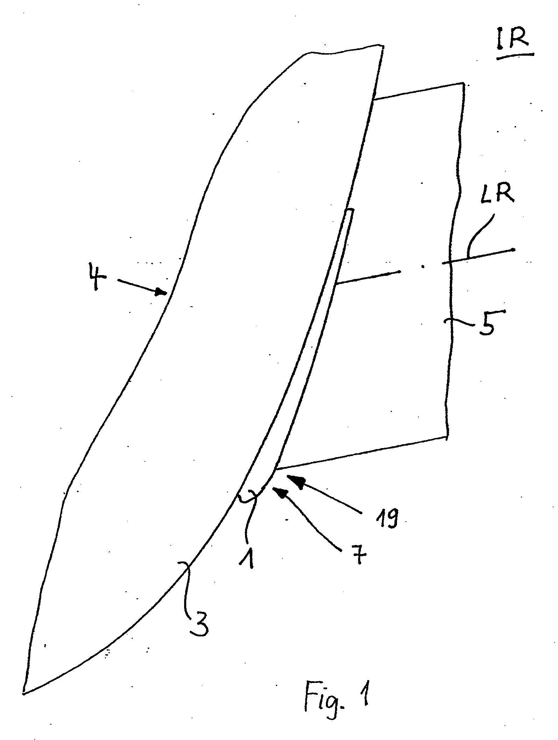

Das in den Figuren 1 bis 8 dargestellte Dichtelement 1 ist zur Abdichtung eines zwischen einem Verkleidungsteil 3 eines Kraftfahrzeuges und einer durch dieses hindurchragenden Lenksäulen-Abdeckung 5 bestehenden Spalts 7 vorgesehen. Das Verkleidungsteil 3 kann insbesondere eine Instrumententafel und beispielsweise ein Oberteil oder Verkleidungsteil, z.B. ein Unterverkleidungsteil einer Instrumententafel sein. Das Verkleidungsteil ist allgemein ein Bauteil im Innenraum eines Kraftfahrzeuges, durch das eine Lenksäule in Bezug auf ihren Querschnitt hindurchtritt. Der Spalt 7 ist Teil einer Öffnung 4, durch die sich die Lenksäule hindurch erstreckt. Das Verkleidungsteil 3 ist Bestandteil der Innenverkleidung im Bereich der Instrumententafel (nicht gezeigt) im Innenraums IR eines Kraftfahrzeuges und befindet sich im Beinbereich des Fahrers. Die Abdichtung mittels des Dichtelements 1 übernimmt auch die Funktion der Schallisolierung gegen Geräusche und Lärm aus dem Motorraum sowie der Abdeckung des Spalts 7.

Die in der Figur 1 gezeigte Seitenansicht einer Ausführungsform des zwischen dem Verkleidungsteil 3 und der Lenksäulen-Abdeckung 5 angeordneten Dichtelements 1 zeigt eine spezielle Lage des Dichtelementes 1 zwischen den genannten Verkleidungsteilen 3 und 5, bei der das Dichtelement 1 ein bestimmtes Maß aus dem Verkleidungsteil 3 herausragt. Bei einer entsprechenden Formgebung des Verkleidungsteils 3 kann erreicht werden, dass das Dichtelement 1 tiefer in das Verkleidungsteil 3 eingelassen ist.

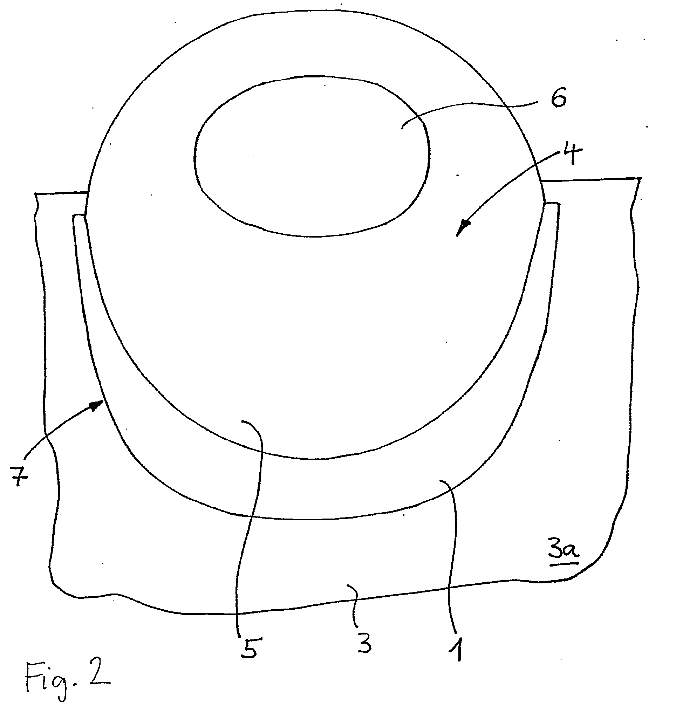

Die Figur 2 zeigt schematisch einen Ausschnitt der Kombination aus dem Verkleidungsteil 3, der Lenksäulen-Abdeckung 5 und einer Ausführungsform des zwischen diesen angeordneten Dichtelements 1 vom Fahrzeug-Innenraum IR, und zwar in etwa von der Fahrersicht aus gesehen. Bei dieser Sichtweise ist die Innenraumseite 3a des Verkleidungsteils 3 sichtbar. Die dargestellte Lenksäulen-Abdeckung 5 weist eine Öffnung 6 auf, durch die sich die Achse der Lenksäule erstreckt, die in der Figur 2 jedoch nicht dargestellt ist. Die Lenksäule ist vorzugsweise in Längsrichtung LR der Lenksäulen-Achse oder in Richtung der Lenk-Mittelachse LR verstellbar. Das erfindungsgemäße Dichtelement 1 ist jedoch auch anwendbar, wenn die Lenksäule alternativ oder zusätzlich quer zu ihrer Längsachse verstellbar, d.h. höhenverstellbar, oder in Bezug auf einen im Bereich des Lenkgetriebes liegenden Bezugspunktes verschwenkbar ist. Derartige optionale Verstell-Mechanismen sind in den Figuren nicht dargestellt.

Das Dichtelement 1 ist aus einem Schaumteil oder Schaumbeschnitt 10 und je nach Anwendungsfall optional aus einer Schicht aus gleitfähigem Material gebildet, die als Gleitschicht gegenüber dem Randbereich 19 der Lenksäulen-Abdeckung 5 dient. Diese Schicht kann durch ein Überzugsteil 20 realisiert sein. Alternativ kann die Schicht aus gleitfähigem Material auf das Schaumteil oder den Schaumbeschnitt 10 aufkaschiert, aufgeklebt oder durch Beflocken auf das Schaumteil 10 aufgebracht sein. Bei der Anordnung des Dichtelements 1 zwischen dem Verkleidungsteil 3 und der Lenksäulen-Abdeckung 5 ist die Schicht aus gleitfähigem Material auf der der Lenksäulen-Abdeckung 5 zugewandten Seite angeordnet. Die Schicht aus gleitfähigem Material und insbesondere das Überzugsteil kann insbesondere dann entfallen, wenn die Lenksäule nur quer zur Lenkachse, nicht jedoch in der Längsrichtung der Lenkachse verstellbar ist.

In einer alternativen Ausführungsform der Erfindung kann die weitere, zumindest abschnittsweise auf dem Schaumbeschnitt angeordnete Schicht aus gleitfähigem Material abschnittsweise mit Partikeln aus textilen Materialien beflockt sein. Durch die Beflockung mit Textilpartikeln wird die Beweglichkeit des Dichtelements erhalten und gleichzeitig ist die durch Beflockung mit Textilpartikeln hergestellte Beschichtung robust oder stabil gegen Abscheuern durch Relativbewegungen zwischen der Abdeckung 5 und dem Verkleidungsteil 3. Das Beflocken wird vorzugsweise dadurch erreicht, dass zunächst das Dichtelement an dem zu beflockenden Bereich Klebstoff z.B. durch Besprühen der Dichtelement-Oberfläche aufgetragen wird und anschließend die mit Klebstoff versehene Oberfläche mit Textil-Partikeln belegt wird. Als Klebstoff ist ein aushärtefähiger Haftkleber geeignet. Die Beflockung mit Textilpartikeln kann auch durch Eintauchen zumindest eines Teils des Dichtelements in ein entsprechendes Bad mit Textilpartikeln hergestellt werden. Mit der Beflockung des Schaumbeschnitts wird eine samtähnliche Haptik sowie eine gute Gleitfähigkeit erreicht.

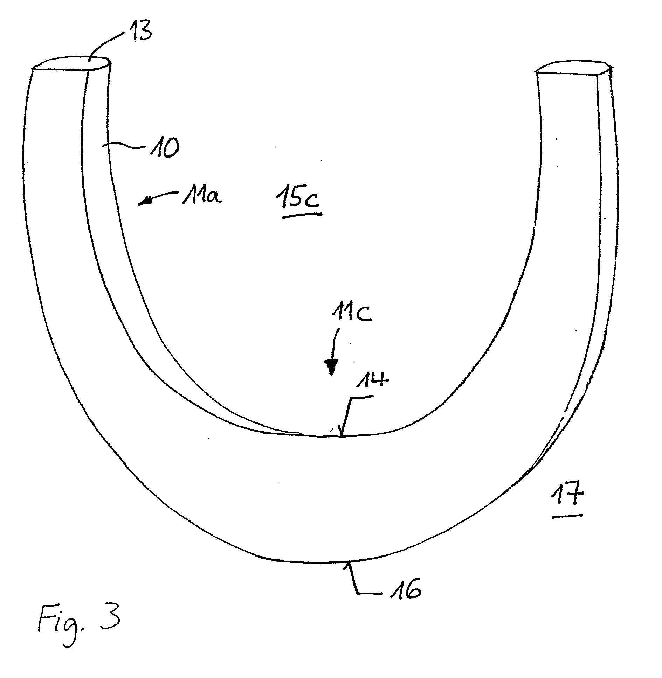

Eine Ausführungsform des Schaumbeschnitts 10 ist für sich betrachtet und schräg von vorne gesehen in der Figur 3 gezeigt. Dieser weist eine Gestalt auf, bei der entsprechende Flächen des Schaumbeschnitts einerseits mit einem Randbereich des Verkleidungsteils und andererseits mit einer Anlagefläche der Lenksäulen-Abdeckung zur Anlage gebracht werden kann, um eine zwischen dem Verkleidungsteil und der Lenksäulen-Abdeckung bestehende Öffnung zumindest bereichsweise abzudichten. Vorzugsweise weist das Dichtelement 1 insgesamt eine gekrümmte Gestalt auf. Insbesondere kann das Dichtelement 1 vorzugsweise einteilig mit zwei Schenkeln 11a, 11 b und einem diese verbindenden, gekrümmten Mittelteil 11 c gebildet sein und in einer bevorzugten Ausführungsform im wesentlichen eine gekrümmte und insbesondere U-förmige oder hufeisenförmige Gestalt (Figur 3) besitzen.

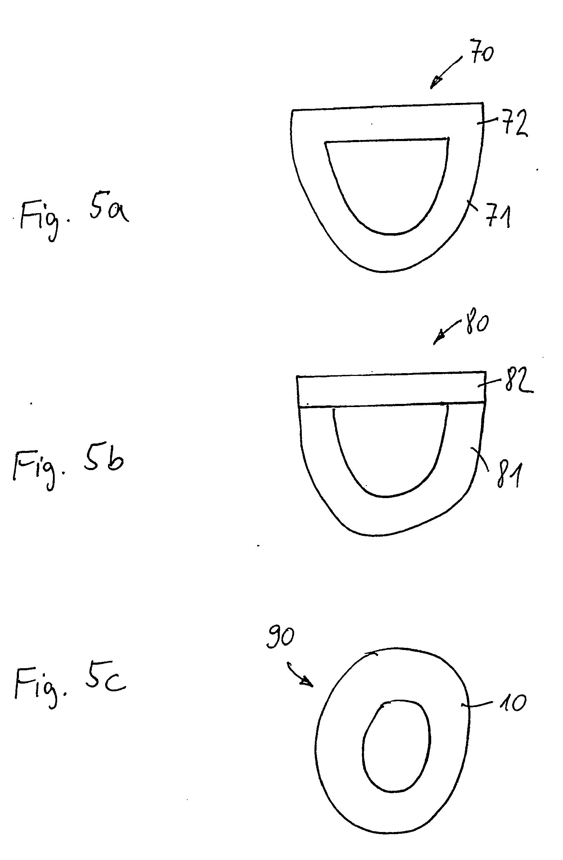

Das Dichtelement kann auch in einer in Umfangsrichtung geschlossenen Form und insbesondere kragenförmig torusförmig oder ringförmig, d.h. als die Lenksäulen-Abdeckung umgreifende oder umschließende Form gebildet sein Figuren (5a, 5b, 5c). In Umfangsrichtung gesehen kann die Form und Größe der Schnittfläche variabel oder zumindest abschnittsweise konstant sein. Bei allen Alternativen kann das Dichtelement einteilig (Figuren 5a und 5c, Bezugszeichen 70 bzw. 90) oder auch mehrteilig (Figur 5b, Bezugszeichen 80) gebildet sein.

Bei der mehrteiligen Ausführungsform des Dichtelements kann dieses insbesondere zweiteilig gebildet sein. Dabei kann der Bereich, der zur Anordnung am Armaturenbereich vorgesehen ist, zur Anlage an dem Armaturenbereich vorgesehen sein. Auch kann zumindest ein Teil dieses Bereichs durch die Spiegelbank des Armaturenbereichs realisiert sein. Insbesondere in diesem Anwendungsfall, jedoch auch generell, kann das Dichtelement aus einem gekrümmten und insbesondere U-förmigen Bereich 71 bzw. 81 und einem Querteil 72 bzw. 82 gebildet sein, der die Enden des gekrümmten Teils 71 bzw. 81 miteinander verbindet; indem diese an beiden Enden des gekrümmten Teils 71 bzw. 81 anliegt. Bei der zweiteiligen Bauform nach der Figur 5b kann das Querteil mit den Enden des gekrümmten Teils 71 bzw. 81 verklebt sein. Zusätzlich oder alternativ kann das Querteil auf die Enden des gekrümmten Teils 71 bzw. 81 aufgesteckt sein.

Ein Vorteil der zweiteiligen Gestaltung des Dichtelements ist, dass dieses auch noch nach der Lenksäulen-Montage auf die Lenksäulen-Abdeckung aufgebracht werden kann.

Der Schaumbeschnitt 10 dient als Absorptionsschicht und ist aus einem Schaumstoff mit einer Rückstellfähigkeit in allen räumlichen Richtungen gebildet. Aufgrund der Verwendung in einem Kraftfahrzeug ist ein Material vorzusehen, dessen Rückstellfähigkeit unabhängig von der Temperatur gewährleistet ist. Insbesondere eignet sich daher Polyurethan-Weichschaum für die erfindungsgemäße Verwendung.

Für das zu wählende Material des Schaumteils 10 sind vorzugsweise einzelne oder mehrere folgender Bestimmungsgrössen zu erfüllen:
- Materialdichte vorzugsweise 24 kg/m³ mit einer Abweichung von +/- 0,25;
- Stauchhärte bei 40% Verformung: zwischen 0,5 und 3 kPa, wobei ein Bereich von 1,6 kPa +/- 0,25 besonders vorteilhaft ist;
- Schaumstoff-Zellenzahl zwischen 20 und 200 pro cm.

Durch die Erfüllung der genannten Stauch-Härte wird erreicht, dass zum einen die Rückstellverformbarkeit und zum anderen die zur Verformung erforderliche Kraft auf ein vorbestimmtes Maß begrenzt ist.

Als Basis-Material ist vorzugsweise ein Polyether vorgesehen. Der Schaumbeschnitt 10 kann auch vollständig aus Polyether gebildet sein. Als Material für den Schaumbeschnitt 10 ist jedoch ein übliches künstliches Gummi-Material (TPE) nicht geeignet, da dieses die erforderliche Rückstellfähigkeit nicht aufweist. Zwar eignet sich ein Natur-Kautschuk für die erfindungsgemäße Verwendung, jedoch scheidet diese Material in den meisten Anwendungsfällen wegen des relativ hohen Preises aus.

Bei einer bevorzugten Ausführungsform des Dichtelements 1 ist der Schaumbeschnitt 10 zumindest abschnittsweise und insbesondere in einem mittleren Bereich Mittelteil 11 c, der zur Anlage an einen entsprechenden Anlagebereich oder Randbereich 19 der Lenksäulen-Abdeckung 5 vorgesehen ist, mit einem Überzugsteil 20 abgedeckt oder überzogen. Das Überzugsteil 20 dient als Gleitschicht gegenüber dem Randbereich 19 der Lenksäulen-Abdeckung 5 ist als dünne, flexible und in allen Richtungen dehnfähige Schicht oder Haut gebildet.

Zusätzlich kann an dem Bereich der Lenksäulen-Abdeckung 5, die zur Anlage an das Dichtelement 1 vorgesehen ist, eine Teflon-Schicht vorgesehen sein. Auch kann die Lenksäulen-Abdeckung an diesem Bereich aus Teflon gebildet sein.

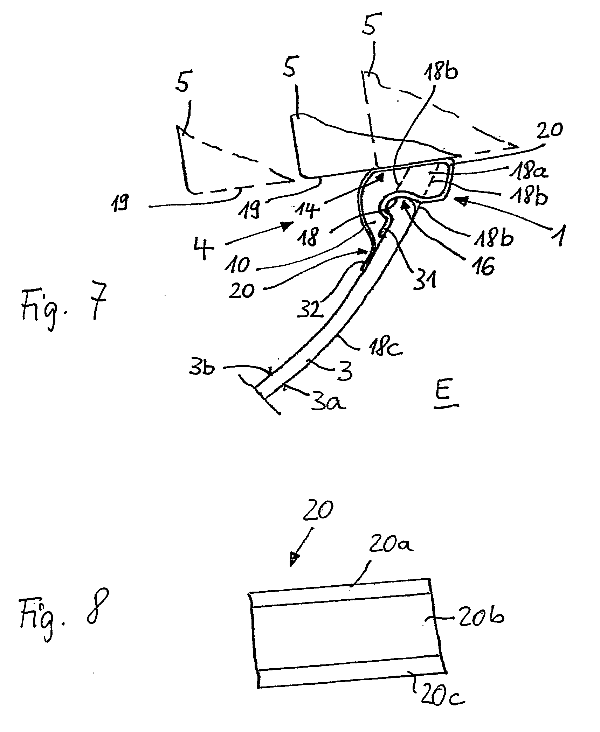

Das Dichtelement 1 bzw. bei gedanklicher Vernachlässigung der Anordnung des Überzugsteils 20 der Schaumbeschnitt 10 weist entsprechend der Querschnittsform 13 desselben eine erste Anlagefläche bzw. Anlagekontur 14 auf (Figuren 3 und 7), die zum Andrücken an eine entsprechende Fläche 19 der Lenksäulen-Abdeckung 5 vorgesehen ist. Die Anlagefläche 14 erstreckt sich an der entsprechenden Seite des Dichtelements 1 bzw. des Schaumbeschnitts 10 für die meisten Anwendungsfällen zumindest über einen mittleren Bereich 11c und vorzugsweise zumindest über ein Drittel der Längserstreckung desselben. Jedoch hängt die Größe der Anlagefläche 14 vom Anwendungsfall ab und ist an einem ersten Bereich 15 des Dichtelements 1 bzw. des Schaumbeschnitts 10 und bei einer gekrümmten Gestalt derselben an einem inneren Bereich 15, z. B. in dem von den Schenkeln 11a, 11 b aufgespannten Bereich gelegen. Weiterhin weist das Dichtelement 1 bzw. der Schaumbeschnitt 10 oder dessen Querschnittsform 13 im Mittelteil 11c eine zweite Anlagefläche bzw. Anlagekontur 16 auf, die in einem benachbarten oder einem entgegengesetzt zu dem ersten Bereich 16 gelegenen zweiten bzw. äußeren Bereich 17 des Schaumbeschnitts 10 gelegen und zum Andrücken gegen einen entsprechenden Randbereich 18 des Verkleidungsteils 3 oder genauer gesagt deren Öffnung 4 vorgesehen ist.

Das Dichtelement 1 aus Schaumbeschnitt 10 und aus der gleitfähigen Schicht, die insbesondere ein Überzugsteil 20 sein kann, ist derart positioniert zwischen der betreffenden Verkleidungsteil und der Lenksäulen-Abdeckung, dass es stabil zwischen diesen gelegen ist. In bezug auf eine Schnittebene E gesehen, in der die Lenk-Mittelachse LR gelegen ist und die in der dargestellten Ausführungsform durch das mittlere Drittel des Dichtelements 1 verläuft, ist das Dichtelement 1 in bezug auf die Lenksäulen-Abdeckung 5 und das Verkleidungsteil 3 derart positioniert, dass die auf die Schnittebene projizierte Verlängerung 18a der Konturlinien 18b des Randbereichs 18 des Verkleidungsteils 3 oder der Schnittlinien des Verkleidungsteils 3 in der Schnittebene E innerhalb des Querschnitts des Dichtelements 1 gelegen ist.

Insbesondere bei einer in seiner Längsrichtung gekrümmten Gestalt des Dichtelements 1 ist vorzugsweise die auf die Schnittebene projizierte Verlängerung 18a der Konturlinien 18b des Randbereichs 18 des Verkleidungsteils 3 innerhalb des Querschnitts des Dichtelements 1 gelegen.

Insbesondere bei einer wenig gekrümmten oder sich im wesentlichen geradlinig erstreckenden Gestalt des Dichtelements 1 ist vorzugsweise die auf die Schnittebene projizierte Verlängerung 18a der Konturlinien 18c des Randbereichs 18 des Verkleidungsteils 3 in der Schnittebene E innerhalb des Querschnitts des Dichtelements 1 gelegen.

Die stabile Lage des Dichtelements 1 ist erforderlich insbesondere bei einer verstellbaren Lenksäule wegen der bei der Verstellung der Lenksäule auftretenden Relativbewegungen zwischen der Lenksäulen-Abdeckung 5 und dem Verkleidungsteil 3.

Das Dichtelement 1 bzw. der Schaumbeschnitt 10 kann dabei in der Schnittebene E, in der die Lenkachse gelegen ist, gesehen derart gebildet sein, dass im undeformierten Zustand des Dichtelements 1 bzw. des Schaumbeschnitts 10 dessen erste Anlagefläche 14 eine quer zur Längsrichtung des Schaumbeschnitts gesehen größere Erstreckung besitzt als dessen zweite Anlagefläche 16. Dies bewirkt in den meisten Anwendungsfällen eine Verbesserung der Stabilität der Lage zwischen dem Verkleidungsteil und der Lenksäulen-Abdeckung.

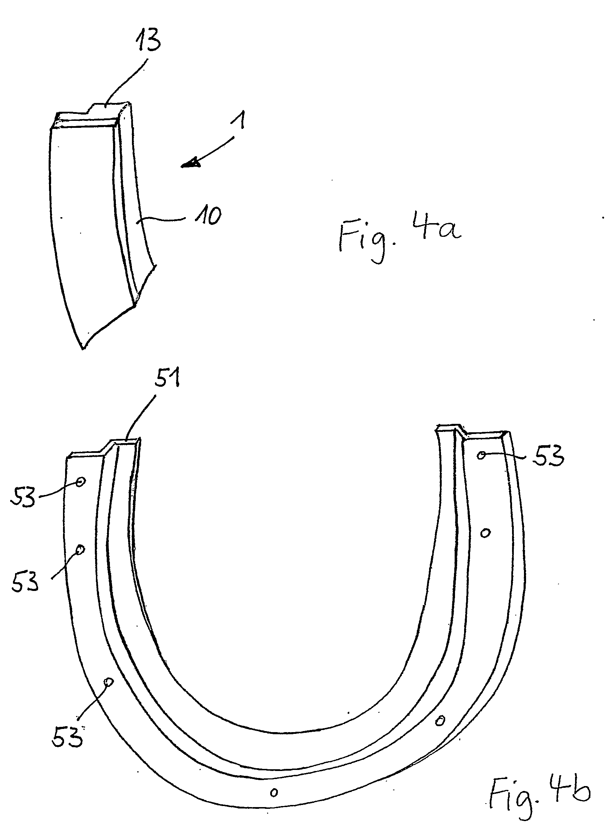

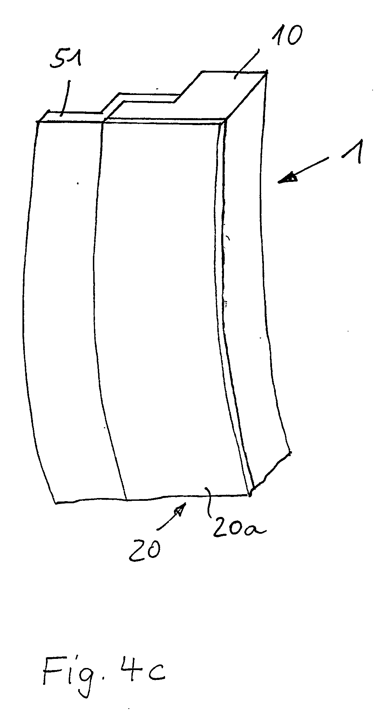

In einer ersten erfindungsgemäßen Alternative kann die Gleitschicht zumindest abschnittsweise auf die erste Anlagefläche 14 des Schaumbeschnitts 10 aufkaschiert, aufgeklebt oder auf andere Weise und insbesondere durch Beflocken aufgebracht sein (Figuren 4a, 4c). Dabei kann der Schaumbeschnitt 10 zusammen mit der zumindest bereichsweise angeordneten Gleitschicht 20a über ein Rahmenelement 51 an dem entsprechenden Randbereich 18 des Verkleidungsteils 3 oder direkt an diesem vorzugsweise durch Verschweißen oder Verkleben angebracht sein.

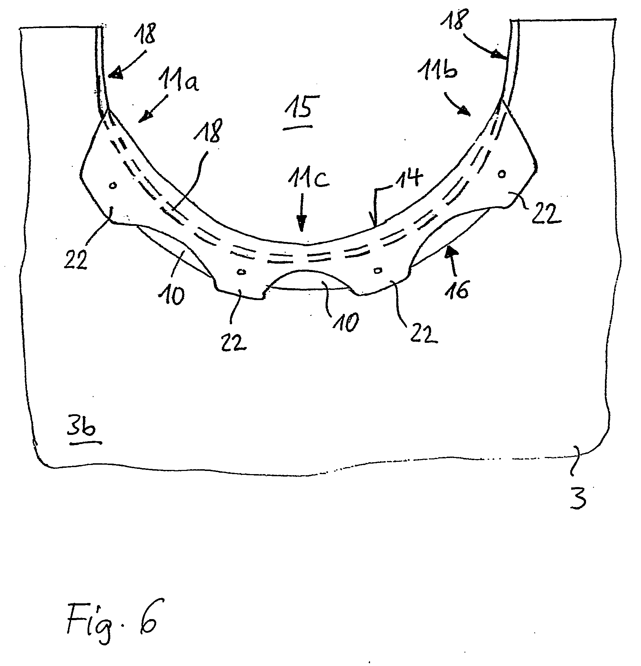

In einer zweiten erfindungsgemäßen Alternative kann der Schaumbeschnitt 10 mit einer Gleitschicht in Form eines Überzugsteils 20, das zumindest abschnittsweise dem Schaumbeschnitt übergespannt oder übergezogen ist, gebildet sein (Figuren 6, 7 und 9a bis 9d).

In einer dritten erfindungsgemäßen Alternative kann das Überzugsteil 20 als Schlauch oder Hose mit der Form des herzustellenden Dichtelements 1 gebildet sein, in die Schaum eingeschäumt wird, um das Schaumteil 10 und somit das gesamte Dichtelement 1 herzustellen (nicht dargestellt).

Bei der zweiten und der dritten Alternative kann auch ein Schaumbeschnitt 10 nach der ersten Alternative verwendet werden, auf dem also zumindest abschnittsweise eine gleitfähige Schicht aufgebracht ist.

Bei allen genannten Alternativen kann der Schaumbeschnitt 10 mit oder ohne gleitfähige Schicht oder Überzugsteil 20 auf ein Rahmenelement 51 eingesetzt werden (Figuren 4a, 4b, 4c), das seinerseits auf dem Verkleidungsteil z.B. mittels Befestigungsmitteln angebracht wird. In der Darstellung der Figur 4b sind Bohrungen 53 zur Realisierung dieser Befestigungsart dargestellt. Es ist natürlich ebenfalls möglich, das Rahmenteil 51 oder die Kombination 55 (Figur 4c) aus Rahmenteil 51 und Schaumbeschnitt 10 mit Überzugsteil 20 auf das Verkleidungsteil aufzukleben oder mit diesem zu verschweißen. Im einzelnen zeigt die Figur 4b das Rahmenteil 51 zur Aufnahme des erfindungsgemäßen Schaumbeschnitts 10. Das Rahmenteil 51 kann einteilig mit dem Verkleidungsteil 3 oder als eigenständiges Teil, das auf dem Verkleidungsteil 3 anzuordnen ist, ausgebildet sein.

Das Überzugsteil 20 kann bei den genannten Alternativen ein- zwei- drei- oder allgemein mehrschichtig gebildet sein. In jedem Fall ist die der Lenksäulen-Abdeckung 5 zugewandte Außenseite des Überzugsteils 20 aus einem gleitfähigen Material und vorzugsweise aus einem Polyamid-Gewebe gebildet. Durch eine Zwei- oder allgemein Mehrschichtigkeit wird eine erhöhte Stabilität des Materials und eine Minimierung der Faltenbildung an den Gleitflächen erreicht. Andererseits führt eine Erhöhung der Materialstärke des Überzugsteils 20 zu einer Verringerung der gleichfalls zu erfüllenden Flexibilität. Vorzugsweise ist daher eine Ein-, Zwei- oder Dreischichtigkeit für das Überzugsteil 20 vorzusehen.

Bei einer Einschichtigkeit des Überzugsteils ist dieses aus einem gleitfähigen Gewebe und vorzugsweise aus einem Polyamid-Gewebe gebildet.

Bei einer Zweischichtigkeit des Überzugsteils 20 ist dieses auf seiner Außenseite, d.h. auf der dem entsprechenden Randbereich 19 der Lenksäulen-Abdeckung 5 zugewandten Seite, aus einem gleitfähigen Gewebe und vorzugsweise aus einem Polyamid-Gewebe gebildet, während das Überzugsteil auf der Schaumbeschnitt-Seite eine Schaumschicht aufweist.

Eine dreischichtige Gestaltung des Überzugsteils 20 ist in der Figur 8 dargestellt. Dabei ist das Überzugsteil 20 aus zwei dehn- und gleitfähigen Gewebeschichten 20a, 20c auf der Außenseite und der Innenseite und vorzugsweise aus einem Polyamid-Gewebe und einer zwischen diesen gelegenen weiteren Schaumstoff-Schicht 20b gebildet. Unter Außenseite wird in diesem Zusammenhang wiederum die dem entsprechenden Randbereich der Lenksäulen-Abdeckung zugewandte Seite, und unter Innenseite die Schaumbeschnitt-Seite verstanden.

Bei allen Varianten ist auf der Außenseite des Überzugsteils 20 vorzugsweise ein Polyamid-Gewebe vorgesehen. In Verbindung mit der erfindungsgemässen Anordnung des Schaumbeschnitts 10 an dem entsprechenden Randbereich des Verkleidungsteils 3 sowie der Formgebung des Schaumbeschnitts 10 bzw. des Dichtelements 1 wird erreicht, dass auch bei einer Bewegung der Lenksäulen-Abdeckung 5 das Dichtelement 1 eine stabile Lage einnimmt und ein Abdichten des Innraums IR sichergestellt wird.

Als Ausgangsmaterial für das gleitfähige Gewebe und auch für das gesamte Überzugsteil 20 können entsprechende Stanzteile verwendet werden. Bei Verwendung einer Schaumschicht für das Überzugsteil 20 wird diese vorzugsweise aufgeschäumt. Dies kann also direkt auf den Schaumbeschnitt 10 aufgeschäumt werden, wenn das Überzugsteil 20 zumindest bereichsweise auf den Schaumbeschnitt 10 direkt aufgebracht wird. Bei der Verwendung eines zwei- oder dreischichtigen Überzugsteils, das zum Überspannen des Schaumbeschnitts 10 vorgesehen ist, kann die Schaumschicht auf ein gleitfähiges Gewebe aufgeschäumt werden.

Alternativ kann das Überzugsteil 20 auch auf den Schaumbeschnitt 10 aufgeklebt werden. Dabei werden Streifen oder ein Netz von Klebe-Bahnen verwendet, so dass die Verzerrung des Überzugsteils 20 gegenüber dem Schaumbeschnitt 10 durch Relativbewegungen ausgleichbar st.

Bei der genannten zweiten Alternative, bei der das Überzugsteil 20 über das Schaumteil 10 gespannt wird, wird das Überzugsteil 20 mit einem ersten Rand 31 an dem entsprechenden Randbereich 18 des Verkleidungsteils 3 fixiert. Ein dem ersten Rand gegenüber liegender zweiter Rand 32 wird ebenfalls an dem Verkleidungsteil 3 fixiert. Der erste Rand 31 und der zweite Rand 32 werden vorzugsweise auf derselben des Überzugsteils 20, und zwar auf der Fahrwerkseite 3b desselben fixiert. Dabei umspannt das Überzugsteil 20 zumindest bereichsweise das Schaumteil 10. Das Fixieren des ersten Rands 31 bzw. des zweiten Rands 32 des Überzugsteils 20 kann mittels Befestigungsmitteln oder durch Verschweißen oder durch Verkleben oder Kombinationen davon erfolgen. Zusätzlich kann das Schaumteil mit diesen Mitteln auf den entsprechenden Bereich des Verkleidungsteils 3 aufgebracht oder fixiert werden. Dabei kann das Schaumteil mittels eines Rahmenelements 51 auf das Verkleidungsteil 3 aufgesetzt werden.

Das Fixieren des ersten Rands 31 des Überzugsteils kann zusammen mit einem Fixieren des Schaumteils am Verkleidungsteil 3 oder am Überzugsteil 20 erfolgen.

Das Fixieren des Überzugsteils an seinen Rändern ist schematisch in der Figur 6 dargestellt. Dieses kann bereichs- oder punktweise durch Verschweißen, Verkleben oder mit mechanischen Mitteln erfolgen. Bei einem Verkleben muss insbesondere sichergestellt sein, dass die entstehende Klebeverbindung eine ausreichende Festigkeit aufweist, die den im operationellen Einsatz auftretenden Dehnbewegungen standhält.

Das Überzugsteil 20 wird also mit seinem dem ersten Rand 31 gegenüberliegenden Rand 32 über den Schaumbeschnitt 10 gezogen und erstreckt sich somit über die gesamte, der Lenksäulen-Abdeckung zugewandten Seite 14 des Schaumbeschnitts 10 und ist auf der gegenüberliegenden Fläche 14 befestigt am Verkleidungsteil.

Das Überzugsteil 20 weist an der zweiten Randseite 32, die über den Schaumbeschnitt 10 gezogen ist und auf der zweiten Seite 3b des Verkleidungsteils 3 befestigt ist,

Laschen 22 auf, die durch Aussparungen 23 voneinander getrennt sind. Dadurch wird ein faltenfreies Befestigen des Überzugsteils an der zweiten Seite 3b des Verkleidungsteils 3 ermöglicht. Das Überzugsteil umschließt den Schaumbeschnitt zumindest teilweise, an den Flächen, die der Lenksäulen-Abdeckung zugewandt sind

Das Verschweißen kann generell mittels Ultraschall-Verfahren erfolgen.

Im Falle der Befestigung des ersten Randes 31 und/oder des zweiten Randes 32 mit mechanischen Mitteln sind in den Laschen 22 Öffnungen 41 vorgesehen, die mit entsprechenden an dem Verkleidungsteil 3 angeordneten Befestigungs-Domen oder - Haken oder anderen Befestigungsmitteln 40 zusammenwirken, so dass die Laschen in einem Zustand fixiert werden können, in dem diese das Schaumteil 10 überspannen.

An dem Verkleidungsteil 3 kann zusätzlich weiteres Schall-Isolierungsmaterial, z.B. Filz, aufgebracht sein, um eine zusätzliche Schall-Isolierung zu erreichen.

Alternativ können die beschriebenen Varianten für die Anordnung des Dichtelements am Verkleidungsteil 3 auch für die Anordnung des Dichtelements 1 an der Lenksäulen-Abdeckung vorgesehen sein. Dies ist besonders dann sinnvoll, wenn die Lenksäule nicht längsverschieblich, sondern nur höhenverstellbar ist.

Im folgenden wird das erfindungsgemässe Verfahren zur Montage des Dichtelements 1 an einem Innenverkleidungsteil eines Kraftfahrzeuges beschrieben.

In einem ersten Schritt wird das Verkleidungsteil auf der Oberseite 101 einer Aufnahme-Vorrichtung 100 positioniert, die selbst wiederum üblicherweise auf einer Montage-Einrichtung 102 angeordnet ist. Die Aufnahme-Vorrichtung 101 hat vorzugsweise eine Gestalt, dass bei Aufnahme des Verkleidungsteils 3 die Oberseite 102 der Aufnahme-Vorrichtung 101 bereichsweise formschlüssig mit der InnenraumSeite 3a des Verkleidungsteils 3 zusammenwirkt. Das Verkleidungsteil 3 kann zusätzlich durch Befestigungsmittel an der Aufnahme-Vorrichtung fixiert oder daran für die Ausführung der Montage des Dichtelements 1 befestigt werden. Wie auch aus der Figur 8a zu ersehen ist, liegt das Verkleidungsteil 3 vorzugsweise derart auf der Aufnahme-Vorrichtung 101 auf, dass die der Innenraumseite 3a entgegengesetzte Seite für die Montage frei zugänglich gelegen ist. Dabei kann die Orientierung der Aufnahme-Vorrichtung 101 bzw. des Verkleidungsteils 3 nach dessen Auflegen auf derselben je nach den Randbedingungen der Monatage orientiert sein. So kann die Montage-Einrichtung eine sich in der Horizontal-Ebene erstreckende Montage-Platte sein, so dass das Verkleidungsteil 3 aufgrund deren üblicherweise gekrümmten Flächenstruktur in Bezug auf die Horizontal-Ebene in wesentlichen schräg gelegen ist.

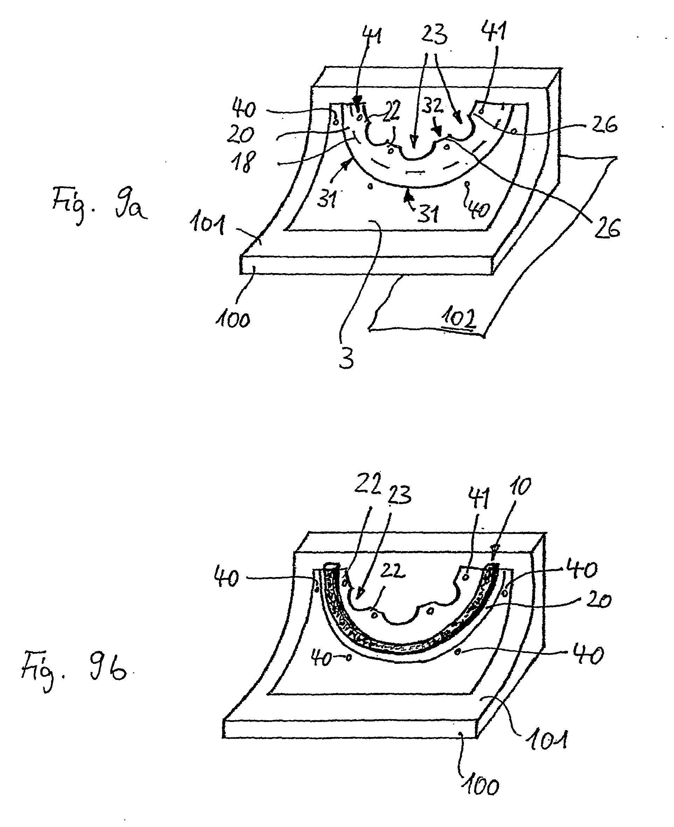

Weiterhin wird an dem Verkleidungsteil 3 ein vorgefertigtes Ausgangsmaterial des Überzugsteils 20 aufgebracht. Das-Auflegen des Überzugsteils 20 kann mittels einer Schablone erfolgen. Figur 9a zeigt das auf der Aufnahme-Vorrichtung 101 aufgesetzte Verkleidungsteil mit dem an diesem fixierten Überzugsteil 20 im vorgefertigten Zustand. Das Verkleidungsteil ist mit einem ersten Randbereich 31 an dem Verkleidungsteil 3 fixiert. Dies kann auf verschiedene Weise realisiert sein. Dabei kommt vorzugsweise ein Verschweißen oder Ankleben in Betracht, wobei dieses punktweise oder über lineare oder flächige Bereiche des Randbereichs 31 erfolgen kann. Bei einem Verkleben muss insbesondere sichergestellt sein, dass die entstehende Klebeverbindung eine ausreichende Festigkeit aufweist, die den im operationellen Einsatz auftretenden Dehnbewegungen standhält. Auch kann der Randbereich mittels vorgefertigter Öffnungen oder Schlitze an Befestigungs-Dome oder -Haken oder ähnliche Befestigungsmittel, die an der weiten Seite 3b der Verkleidungsteils 3 vorgesehen sind, eingehängt werden.

Der zweite Randbereich 32 des vorgefertigten Überzugsteils 3 weist Laschen 22 auf, die durch Aussparungen 24 voneinander getrennt sind. Diese Gestaltung des zweiten Randbereichs 32 bewirkt ein faltenfreies Befestigen dieses zweiten Randbereichs 26 an dem Verkleidungsteil 3 nach Ausführung der weiteren Montageschritte. Die Laschen 22 bilden nach der Befestigung des ersten Randbereichs 25 an dem Verkleidungsteil eine freie Randseite des vorgefertigten Überzugsteils (Figur 9a).

In einem weiteren Schrittes der Montage des Dichtelements an dem Verkleidungsteil 3 wird der Schaumbeschnitt auf das Verkleidungsteil aufgelegt (Figur 9b). Dabei Schaumbeschnitt bzw. das Dichtelement 1 ist im Zusammenwirken mit der Lenksäulen-Abdeckung derart an dem Verkleidungsteil 3 angeordnet, dass sich auf beiden Seiten der Verlängerung des Querschnitts des Verkleidungsteils 3 Teile des Dichtelements 1 erstrecken. Um diese Anordnung zu erreichen, wird vorzugsweise eine Hilfs-Vorrichtung wie z.B. eine Schablone verwendet (nicht dargestellt).

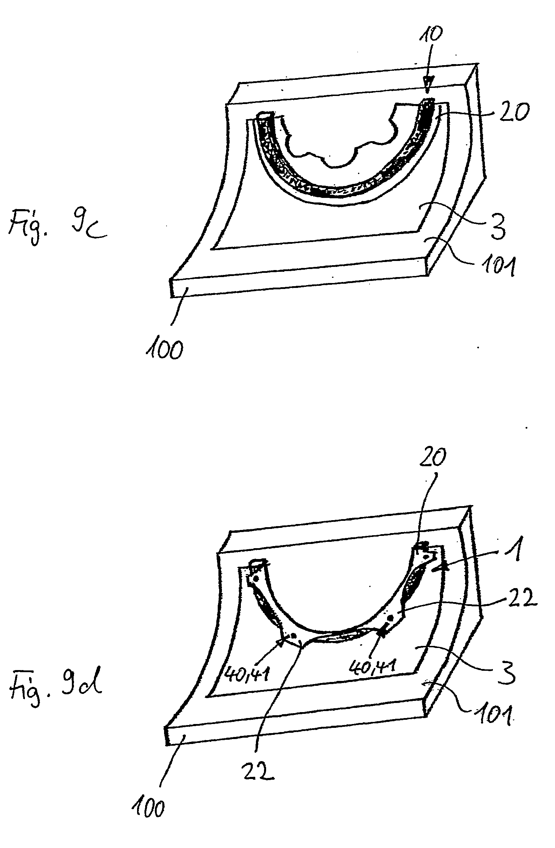

Weiterhin wird der Schaumbeschnitt auf der Fahrwerkseite 3b des Verkleidungsteils an vorbestimmten Punkten fixiert oder befestigt (Figur 9c). Die Befestigung des Schaumbeschnitts 10 kann auf verschiedene Weise erfolgen. Zum einen kann der Schaumbeschnitt 10 auf dem Überzugsteil 20 oder auf der Verkleidungsteil 3 befestigt werden. Außerdem kann dieser sowohl an dem Überzugsteil 20 als auch an dem Verkleidungsteil 3 befestigt sein.

Die Befestigungsart kann wiederum vorzugsweise durch Verschweißen, und zwar punktweise erfolgen. In der Figur 9c ist diese Alternative mittels schematisch eingezeichneter Schweißpunkte 110 dargestellt. Verschweißen kann auch über lineare oder bereichsweise Verbindungsstellen erfolgen. Außer Verschweißen kommt allgemein auch ein Verkleben analog zu den beschriebenen Alternativen oder auch eine mechanische Befestigungsart in Betracht. Die mechanische Befestigung kann wiederum mittels an an dem Verkleidungsteil 3 vorgesehenen Befestigungs-Dome oder -Haken (nicht dargestellt) erfolgen. Diese Befestigungsarten oder -mittel können auch miteinander kombiniert sein.

In einem weiteren Schritt wird das Überzugsteil 3 mit seinen Laschen 22 über den Schaumbeschnitt 10 soweit gezogen, dass diese an dafür vorgesehenen Stellen befestigt werden können.

In einer ersten Alternative wird dazu der Schaumbeschnitt auf der Fahrwerkseite 3b des Verkleidungsteils 3 an vorbestimmten Punkten oder Bereichen aufgeschweißt (Figur 9d). In einer zweiten Alternative werden an den Laschen 22 vorgesehene Öffnungen oder Schlitze an entsprechenden, an der Fahrwerkseite 3b des Verkleidungsteils 3 vorgesehenen Befestigungsmitteln, wie z.B. Haken oder Domen eingehängt.

Das beschriebene Montageverfahren eignet sich auch für den Fall, dass das Schaumteil 10 durch Einführung von Schaum-Material in einen Schlauch oder eine Hülle oder eine Hose

## Patentansprüche

1. Dichtelement (1) zur Anordnung zwischen einem Verkleidungsteil (3) und einer Lenksäulen-Abdeckung (5) einer Lenkachse, das ein schaumteil aufweist, **dadurch gekennzeichnet, dass** das Schaumteil (10) aus einem rückstellfähigen Material und mit zwei Schenkeln (11a, 11b) und einem diese verbindenden, gekrümmten Mittelteil (11c) gebildet ist.

2. Dichtelement (1) zur Anordnung zwischen einem Verkleidungsteil (3) und einer Lenksäulen-Abdeckung (5) einer Lenkachse, das ein schaumteil aufweist, **dadurch gekennzeichnet, dass** das Schaumteil (10) aus einem rückstellfähigen Material und in einer in Umfangsrichtung geschlossenen Form gebildet ist.

3. Dichtelement (1) zur Anordnung zwischen einem Verkleidungsteil (3) und einer Lenksäulen-Abdeckung (5) einer Lenkachse nach einem der voranstehenden Ansprüche, **dadurch gekennzeichnet, dass** das Dichtelement (1) zweischichtig aus dem rückstellfähigem Schaumteil (10) und zusätzlich auf der der Lenksäulen-Abdeckung (5) zugewandten Seite zumindest abschnittsweise zusätzlich aus einer Schicht aus gleitfähigem Material gebildet ist.

4. Dichtelement (1) zur Anordnung zwischen einem Verkleidungsteil (3) und einer Lenksäulen-Abdeckung (5) einer Lenkachse nach dem Anspruch 3, **dadurch gekennzeichnet, dass** die Schicht aus gleitfähigem Material aufkaschiert, aufgeklebt oder durch Beflocken auf das Schaumteil (10) aufgebracht ist.

5. Dichtelement (1) zur Anordnung zwischen einem Verkleidungsteil (3) und einer Lenksäulen-Abdeckung (5) einer Lenkachse nach dem Anspruch 3, **dadurch gekennzeichnet, dass** die Schicht aus gleitfähigem Material aus einem Überzugsteil (20) aus flexiblem und dehnfähigem Material gebildet ist.

6. Dichtelement (1) nach dem Patentanspruch 5, **dadurch gekennzeichnet, dass** das Überzugsteil (20) dem Schaumteil (10) zumindest abschnittsweise übergespannt ist.

7. Dichtelement (1) nach einem der voranstehenden Patentansprüche 5 bis 6, **dadurch gekennzeichnet, dass** das Überzugsteil (20) auf dem Verkleidungsteil (3) mittels Befestigungsmitteln fixiert ist.

8. Dichtelement (1) einem der voranstehenden Patentansprüche 5 bis 7, **dadurch gekennzeichnet, dass** das Überzugsteil (20) auf dem Verkleidungsteil (3) punktweise oder bereichsweise aufgeklebt ist.

9. Dichtelement (1) einem der voranstehenden Patentansprüche 5 bis 8, **dadurch gekennzeichnet, dass** das Überzugsteil (20) mit dem Verkleidungsteil (3) punktweise oder bereichsweise verschweißt ist.

10. Dichtelement (1) nach einem der voranstehenden Patentansprüche 5 bis 9, **dadurch gekennzeichnet, dass** das Überzugsteil (20) als Schlauch oder Hose mit der Form des herzustellenden Dichtelements (1) gebildet ist, in die Schaum eingeschäumt ist.

11. Dichtelement (1) nach einem der voranstehenden Patentansprüche 5 bis 10, **dadurch gekennzeichnet, dass** das Überzugsteil (20) einschichtig aus einem Polyamid-Gewebe gebildet ist.

12. Dichtelement (1) nach einem der voranstehenden Patentansprüche 5 bis 10, **dadurch gekennzeichnet, dass** das Überzugsteil (20) zweischichtig aus einem Polyamid-Gewebe und einer Schaumschicht gebildet ist, wobei die Schaumschicht auf der Schaumteil-Seite angeordnet ist.

13. Dichtelement (1) nach einem der voranstehenden Patentansprüche 5 bis 10, **dadurch gekennzeichnet, dass** das Überzugsteil (20) dreischichtig aus zwei Polyamid-Gewebeschichten und einer zwischen diesen gelegenen Schaumschicht gebildet ist.

14. Dichtelement (1) nach einem der voranstehenden Patentansprüche, **dadurch gekennzeichnet, dass** für das Material des Schaumteils (10) einzelne oder mehrere folgender Bestimmungsgrössen erfüllt sind:
- Materialdichte vorzugsweise 24 kg/m³ mit einer Abweichung von +/- 0,25;
- Stauchhärte bei 40% Verformung: zwischen 0,5 und 3 kPa;
- Schaumstoff-Zellenzahl zwischen 20 und 200 pro cm.

15. Dichtelement (1) nach einem der voranstehenden Patentansprüche, **dadurch gekennzeichnet, dass** das Schaumteil (10) aus Polyether oder Polyurethan gebildet ist.

16. Verfahren zur Montage eines Dichtelements nach Anspruch 1 an einem Verkleidungsteil (3) mit folgenden Schritten:
- Positionierung des Verkleidungsteils auf der Oberseite (101) einer Aufnahme-Vorrichtung (100),
- Auflegen eines vorgefertigtes Ausgangsmaterials zur Bildung des Überzugsteils (20) an dem Verkleidungsteil (3),
- Fixieren des Überzugsteils (20) mit einem ersten Randbereich (31) an dem Verkleidungsteil (3),
- Auflegen des Dichtelements auf das Verkleidungsteil (3)
- Fixieren eines zweiten Randbereichs (32) des vorgefertigten Überzugsteils (3) mittels Laschen (22) an dem Verkleidungsteil (3).

17. Verfahren zur Montage eines Dichtelements nach dem Patentanspruch 16, **dadurch gekennzeichnet, dass** das Fixieren des Überzugsteils (20) mit einem ersten Randbereich (31) durch Verkleben oder Verschweißen oder mittels Befestigungselementen erfolgt.

18. Verfahren zur Montage eines Dichtelements nach dem Patentanspruch 16 oder 17, **dadurch gekennzeichnet, dass** das Fixieren des Überzugsteils (20) mit dem zweiten Randbereich (31) durch Verkleben oder Verschweißen oder mittels Befestigungselementen erfolgt.

19. Verfahren zur Montage eines Dichtelements nach einem den Patentansprüche 16 bis 18 **dadurch gekennzeichnet, dass** das Schaumteil (10) an dem Überzugsteil (20) und/oder an dem Verkleidungsteil (3) befestigt ist.

20. Verfahren zur Montage eines Dichtelements nach einem der Patentansprüche 16 bis 19, **dadurch gekennzeichnet, dass** das Verschweißen oder Ankleben punktweise oder über flächige Bereiche erfolgt.

## Claims

1. Sealing element (1) for arrangement between a covering part (3) and a steering column cover (5) of a steering axle having a foam part, **characterized in that** the foam part (10) is formed of a resilient material and with two legs (11 a, 11 b) and a curved middle part (11c) joining these.

2. The sealing element (1) for arrangement between a covering part (3) and a steering column cover (5) of a steering axle having a foam part, **characterized in that** the foam part (10) is formed of a resilient material and a shape closed in circumferential direction.

3. The sealing element (1) for arrangement between a covering part (3) and a steering column cover (5) of a steering axle according to any one of the preceding claims, **characterized in that** the sealing element (1) is formed two-layered of the resilient foam part (10) and additionally on the side facing the steering column cover (5) at least in portions additionally of a layer of slidable material.

4. The sealing element (1) for arrangement between a covering part (3) and a steering column cover (5) of a steering axle according to claim 3, **characterized in that** the layer of slidable material is applied to the foam part (10) through lamination, gluing or flake application.

5. The sealing element (1) for arrangement between a covering part (3) and a steering column cover (5) of a steering axle according to claim 3, **characterized in that** the layer of slidable material is formed of an overlay part (20) of flexible and stretchable material.

6. The sealing element (1) according to claim 5, **characterized in that** the overlay part (20) is at least in portions stretched over the foam part (10).

7. The sealing element (1) according to any one of the preceding claims 5 to 6, **characterized in that** the overlay part (20) is fixed on the covering part (3) by means of fastening means.

8. The sealing element (1) according to any one of the preceding claims 5 to 7, **characterized in that** the overlay part (20) is glued on to the covering part (3) by way of spots or by way of regions.

9. The sealing element (1) according to any one of the preceding claims 5 to 8, **characterized in that** the overlay part (20) is welded onto the covering part (3) by way of spots or by way of regions.

10. The sealing element (1) according to any one of the preceding claims 5 to 9, **characterized in that** the overlay part (20) is formed as hose or trouser with the shape of the sealing element (1) to be established into which foam is foamed.

11. The sealing element (1) according to any one of the preceding claims 5 to 10, **characterized in that** the covering part (20) is formed single-layered of a polyamide fabric.

12. The sealing element (1) according to any one of the preceding claims 5 to 10, **characterized in that** the overlay part (20) is formed two-layered of a polyamide fabric and a foam layer, wherein the foam layer is arranged on the foam part side.

13. The sealing element (1) according to any one of the preceding claims 5 to 10, **characterized in that** the overlay part (20) is formed three-layered of two polyamide fabric layers and a foam layer located between these.

14. The sealing element (1) according to any one of the preceding claims, **characterized in that** for the material of the foam part (10) individual or a plurality of the following determination quantities are satisfied:
- Material density preferentially 24 kg/m³ with a deviation of +/- 0.25;
- Crushing hardness with 40% deformation: between 0.5 and 3 kPa;
- Foam material cell number between 20 and 200 per cm.

15. The sealing element (1) according to any one of the preceding claims, **characterized in that** the foam part (10) is formed of polyether or polyurethane.

16. A method for the assembly of a sealing element according to claim 1 on a covering part (3) with the following steps:
- Positioning of the covering part on the top (101) of a mounting device (100),
- Placing of a prefabricated starting material for forming the overlay part (20) on the covering part (3),
- Fixing of the overlay part (20) with a first marginal region (31) to the covering part (3),
- Placing of the sealing element on to the covering part (3),
- Fixing of a second marginal region (32) of the prefabricated overlay part (3) to the covering part (3) by means of straps (22).

17. The method for assembling a sealing element according to claims 16, **characterized in that** the fixing of the overlay part (20) takes place with a first marginal region (31) through gluing or welding or by means of fastening elements.

18. The method for assembling a sealing element according to claim 16 or 17, **characterized in that** the fixing of the overlay part (20) with the second marginal region (31) takes place through gluing or welding or by means of fastening elements.

19. The method for assembling a sealing element according to any one of the claims 16 to 18, **characterized in that** the foam part (10) is fastened to the overlay part (20) and/or to the covering part (3).

20. The method for assembling a sealing element according to any one of the claims 16 to 19, **characterized in that** the welding or gluing takes place by way of spots or via areal regions.

## Revendications

1. Elément d'étanchéité (1) à disposer entre une partie de parement (3) et un cache de colonne de direction (5) d'un essieu de direction, qui présente une partie en mousse, **caractérisé en ce que** la partie en mousse (10) est formée dans un matériau apte à reprendre sa forme d'origine et de deux pans (11 a,11 b) ainsi que d'une partie centrale (11c) coudée, reliant ceux-ci.

2. Elément d'étanchéité (1) à disposer entre une partie de parement (3) et un cache de colonne de direction (5) d'un essieu de direction, qui présente une partie en mousse, **caractérisé en ce que** la partie en mousse (10) est formée dans un matériau apte à reprendre sa forme d'origine et est formée dans un moule fermé dans la direction périphérique.

3. Elément d'étanchéité (1) à disposer entre une partie de parement (3) et un cache de colonne de direction (5) d'un essieu de direction selon une des revendications précédentes, **caractérisé en ce que** l'élément d'étanchéité est formé en deux couches dans la partie en mousse (10) apte à reprendre sa forme d'origine et est formé en outre sur le côté tourné vers le cache de colonne de direction (5) au moins sur des portions dans une couche de matériau permettant le glissement.

4. Elément d'étanchéité (1) à disposer entre une partie de parement (3) et un cache de colonne de direction (5) d'un essieu de direction selon la revendication 3, **caractérisé en ce que** la couche de matériau permettant le glissement est stratifiée sur, collée sur ou appliquée par flocage sur la partie en mousse (10).

5. Elément d'étanchéité (1) à disposer entre une partie de parement (3) et un cache de colonne de direction (5) d'un essieu de direction selon la revendication 3, **caractérisé en ce que** la couche en un matériau permettant le glissement est formée dans une partie de revêtement (20) en matériau flexible et extensible.

6. Elément d'étanchéité (1) selon la revendication 5, **caractérisé en ce que** la partie de revêtement (20) est étirée au moins sur des portions sur la partie en mousse (10).

7. Elément d'étanchéité (1) selon une des revendications précédentes 5 à 6, **caractérisé en ce que** la partie de revêtement (20) est fixée sur la partie de parement (3) au moyen de moyens de fixation.

8. Elément d'étanchéité (1) selon une des revendications précédentes 5 à 7, **caractérisé en ce que** la partie de revêtement (20) est collée ponctuellement ou sectoriellement sur la partie de parement (3).

9. Elément d'étanchéité (1) selon une des revendications précédentes 5 à 8, **caractérisé en ce que** la partie de revêtement (20) est soudée ponctuellement ou sectoriellement à la partie de parement (3).

10. Elément d'étanchéité (1) selon une des revendications précédentes 5 à 9, **caractérisé en ce que** la partie de revêtement est formée comme un tuyau flexible avec le moule de l'élément d'étanchéité (1) à fabriquer, dans lequel de la mousse est injectée.

11. Elément d'étanchéité (1) selon une des revendications précédentes 5 à 10, **caractérisé en ce que** la partie de revêtement (20) est formée en une couche dans une toile de polyamide.

12. Elément d'étanchéité (1) selon une des revendications précédentes 5 à 10, **caractérisé en ce que** la partie de revêtement (20) est formée en deux couches dans une toile de polyamide et une couche de mousse, dans lequel la couche de mousse est disposée sur le côté de la partie en mousse.

13. Elément d'étanchéité (1) selon une des revendications précédentes 5 à 10, **caractérisé en ce que** la partie de revêtement (20) est formée en trois couches dans deux couches de toile polyamide et une couche de mousse interposée entre celles-ci.

14. Elément d'étanchéité (1) selon une des revendications précédentes, **caractérisé en ce que** en ce qui concerne le matériau de la partie en mousse (10), des grandeurs déterminantes individuelles ou plurielles suivantes sont réalisées:
- épaisseur du matériau de préférence 24 kg/m³ avec un écart de +/- 0,25;
- résistance à la compression en présence d'une déformation de 40%: entre 0,5 et 3 kPa;
- nombre de cellules de la matière plastique mousse entre 20 et 200 par cm.

15. Elément d'étanchéité (1) selon une des revendications précédentes, **caractérisé en ce que** la partie en mousse (10) est formée en polyéther ou polyuréthane.

16. Procédé de montage d'un élément d'étanchéité selon la revendication 1 sur une partie de parement (3) comportant les étapes suivantes:
- positionnement de la partie de parement sur le côté supérieur (101) d'un dispositif de réceptacle (100),
- pose d'un matériau de sortie préfabriqué afin de former la partie de revêtement (20) sur la partie de parement (3),
- fixation de la partie de revêtement (20) par une première zone de bord (31) sur la partie de parement (3),
- pose de l'élément d'étanchéité sur la partie de parement (3),
- fixation d'une deuxième zone de bord (32) de la partie de revêtement préfabriquée (3) au moyen de languettes (22) sur la partie de parement (3).

17. Procédé de montage d'un élément d'étanchéité selon la revendication 16, **caractérisé en ce que** la fixation de la partie de revêtement (20) se fait avec une première zone de bord (31) par collage ou soudure ou au moyen d'éléments de fixation.

18. Procédé de montage d'un élément d'étanchéité selon la revendication 16 ou 17, **caractérisé en ce que** la fixation de la partie de revêtement (20) avec la deuxième zone de bord (31) se fait par collage ou soudure ou au moyen d'éléments de fixation.

19. Procédé de montage d'un élément d'étanchéité selon une des revendications 16 à 18, **caractérisé en ce que** la partie en mousse (10) est fixée sur la partie de revêtement (20) et /ou sur la partie de parement (3).

20. Procédé de montage d'un élément d'étanchéité selon une des revendications 16 à 19, **caractérisé en ce que** la soudure ou le collage se fait ponctuellement ou sur des surfaces à plat.
